# EUROPEAN PATENT APPLICATION

(11) **EP 0 588 771 A1**
(43) Date of publication of application: **23.03.1994**
(21) Application number: 93830323.7
(22) Date of filing: 23.07.1993
(51) Int. Cl.: F27B 9/24, F27B 7/20

(54) **A plant for firing ceramic pipes and the like**

(30) Priority: 16.09.1992 IT MO920123
(71) Applicant: POPPI S.p.A., I-42014 Castellarano (Reggio Emilia) (IT)
(72) Inventor: Cavani, Gianfranco, I-41100 Modena (IT)
(74) Representative: Lanzoni, Luciano

(57) **Abstract**

The invention relates to a plant for firing ceramic pipes and the like. The ceramic pipes 2 rest on horizontal support roller pairs (5) which are introduced into the firing chamber (1) of a furnace and are set in rotation. The roller pairs (5), with relative ceramic pipes (2) for firing loaded on them, are longitudinally transferred, along the firing chamber (1), from an entrance opening to an exit opening, by means of an advancement mechanism which comprises, externally to both lateral walls of the firing chamber (1), series of "V" rests (11) predisposed to engage with the ends of the roller pairs (5) in a cyclic movement schematically composed of a raising, a horizontal translation in a perpendicular direction to the rotation axis of the rollers, and a lowering.

## Description

The invention relates to a plant for firing ceramic pipes and the like.

Traditionally, firing of ceramic manufactures, such as pipes, has been done in tunnel-type furnaces, using cars on which the pipes are positioned and supported vertically. The prior art exhibits many limitations. First of all, by using the apparatus of the prior art it is certainly not convenient to fire pipes having different series of diameter on the same car. The particular arrangement (vertical) used imposes further limitations on the wall breadth of the pipes, which cannot be below a certain breadth limit.

The use of tunnel-type furnaces with cars on which the pipes are arranged also excludes the adoption of rapid firing cycles, a considerable energy waste considering the consistent masses which in every cycle absorb enormous quantities of thermal energy.

An aim of the present invention, as it is characterised in the claims that follow, is that of obviating the drawbacks and lacks in the prior art, as cited above, by providing a plant for firing ceramic pipes which has simple constructional and functional characteristics as well as being of unexceptional mass.

An advantageous characteristic of the present invention is that it is able to fire pipes having different diameter series.

A further advantageous characteristic of the invention is that it permits a better product quality control.

Further characteristics and advantages of the present invention will better emerge from the detailed description that follows, of an embodiment of the invention, herein illustrated purely in the form of a non-limiting example in the accompanying figures, in which:

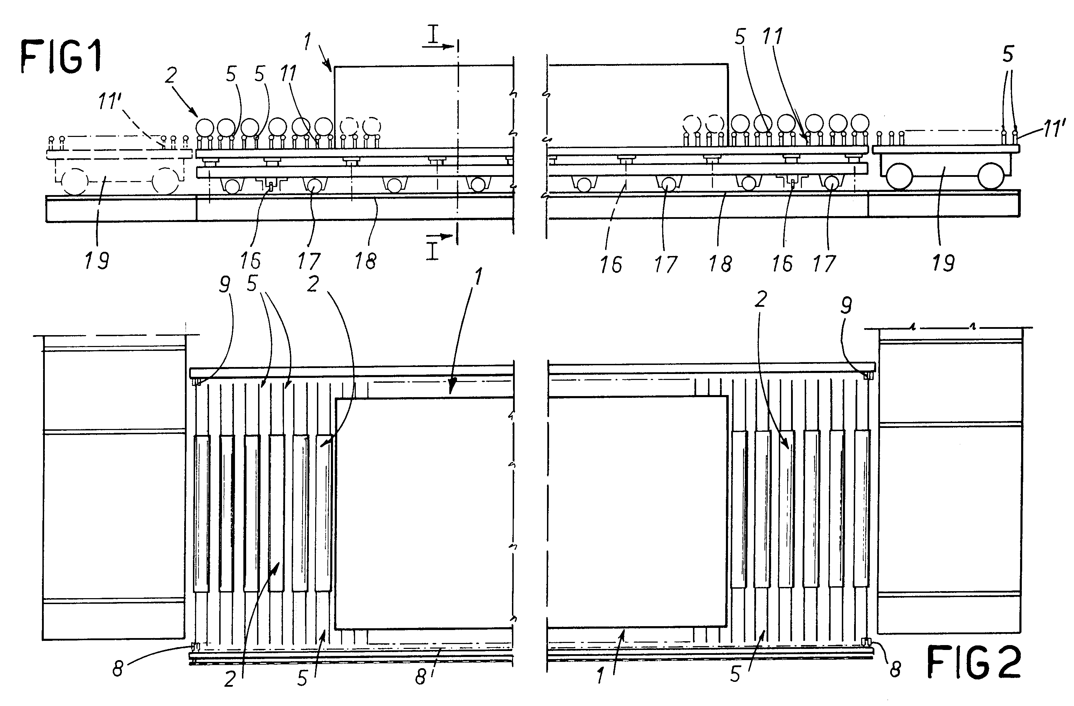

- figure 1 shows a schematic view in vertical elevation;
- figure 2 shows a schematic plan-view from above;

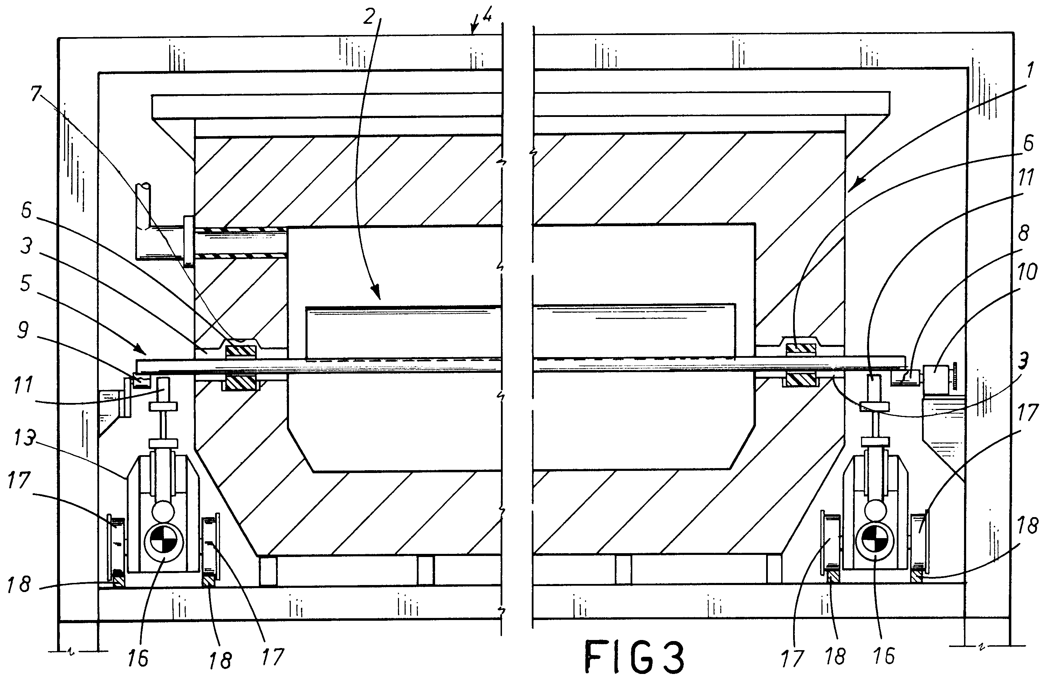

- figure 3 shows, in enlarged scale, part of a schematic section made according to line I-I of figure 1;

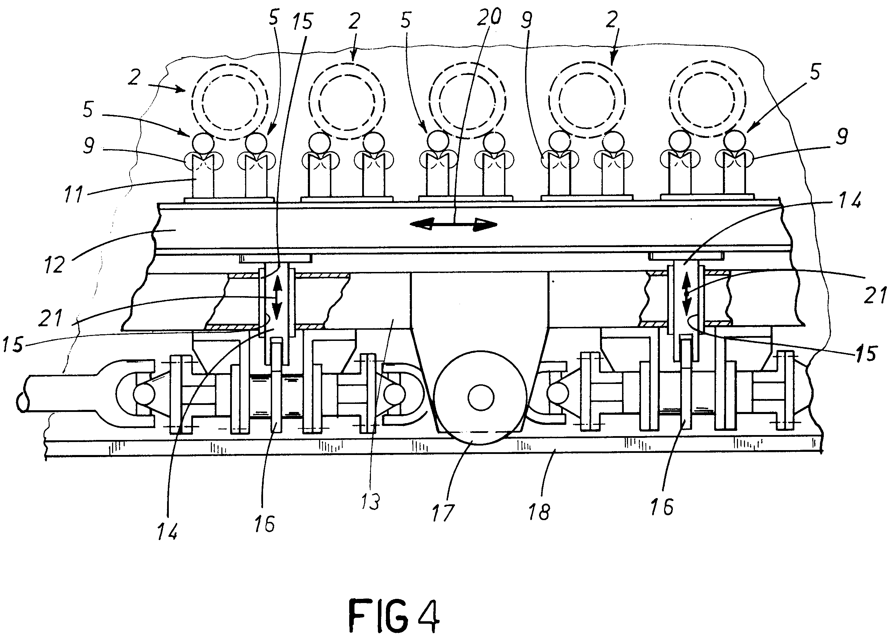

- figure 4 shows a part of a schematic lateral view of figure 3.

With reference to the figures, 1 denotes a firing chamber, of elongate shape, of a furnace specially conceived for the firing of ceramic pipes 2. The firing chamber 1 is laterally defined by two lateral walls exhibiting two slits 3 extending along all of their length. The upper part of the firing chamber 1, being physically separate from the lower part, is superiorly fixed to the horizontal crossbars of arched support structures 4.

Inside the firing chamber 1, a plurality of support roller 5 pairs are arranged, each of which is destined to support a ceramic pipe 2. The rollers 5 are arranged with parallel axes and are normal to the longitudinal axis of the firing chamber 1, which is parallel to the advancement movement direction along the firing chamber 1 itself.

The length of the rollers 5 is greater than the breadth of the firing chamber 1, so that a considerable part of both ends of the rollers 5 project from the firing chamber 1 to the outside through the slits 3. Guide slits 6 are also provided, housed in seats 7 cut into the breadth of the lateral walls of the firing chamber 1, with a preestablished vertical-direction play.

The rollers 5 are supported at their respective ends and set in rotation about their own axes in the same direction by support and drawing means, which, for each roller 5, comprise a pair of drawing rollers 8 rotating in the same direction about two fixed and parallel horizontal axes. The two drawing rollers 8 of each pair, destined to operate on one end of a roller 5, are located at a reciprocal distance which is less, according to a preestablished rapport, than the diameters of the rollers 5 to be supported.

At the other end, the roller 5 rests on a pair of idle rollers 9, also having fixed parallel and horizontal axes, like the drawing rollers 8. Also in the case of the roller 9 pair, the reciprocal distance is less, according to a pre-established rapport, than the diameter of the roller 5 ends to be supported. The rollers 5 are set in rotation by friction with the drawing rollers 8, to which rotation motion is transmitted through a gear case 10, by means of an external mechanical transmission, for example, of the chain type.

The transfer of the ceramic pipes 2 longitudinally internally to the firing chamber 1 is realised by advancement means external to the firing chamber 1, which vertically translate the roller pairs 5 bearing the ceramic pipes 2, lifting them above the roller pairs 8 and 9, then translates them in a longitudinal direction so as to realise a longitudinal advancement run which is equal to the distance between any two contiguous roller pairs 8 and 9 or a multiple thereof.

At the end of the said longitudinal advancement run, the rollers 5 are lowered and once more positioned on roller pairs 8 and 9. The drawing roller pairs 8 and the corresponding idle rollers 9 are equidistant according to the said longitudinal direction. The above-indicated advancement movement is realised by a double series of "V" rests 11 which are arranged so as to interact on contact with a part of the end of the support rollers 5. In particular, each side of the firing chamber 1 is provided with a series of "V" rests 11 fixed on a mobile frame 12 which is in its turn coupled with freedom to translate vertically in both directions (vertical run), to a frame 13 of a translating device predisposed to translate longitudinally in both directions (longitudinal run).

In particular, the coupling of the mobile frame 12 on the frame 13 is realised by means of vertical rods 14 which are coupled vertically axially slidably in seats 15 associated to the frame 13. The vertical movement of the vertical rods 14 and the "V" rests 11 is obtained by means of tappets activated by coaxial cams 16 all arranged in phase and solidly connected in rotation among themselves.

The frame 13 is mounted on wheels 17 which roll on tracks 18 arranged longitudinally in proximity to the bases of the lateral walls of the firing chamber 1. An activating organ, not evidenced in the accompanying figures, performs the desired movements, in both directions according to the longitudinal direction indicated by the arrow 20. The lifting and lowering movements of the "V" rests 11, which is schematically denoted by the arrows, 21, is also produced by means which are not shown in the accompanying figures, which impress pre-established rotations to the cams 16.

The lifting, lowering and longitudinal movements are commanded among themselves in succession, according to a cycle envisaging:
- the lifting of the mobile frame 12 and thus of the "V" rests 11 from the extreme lower position, at which the "V" rests 11 are located inferiorly so as not to interfere minimally with the support rollers 5 housed on the roller pairs 8 and 9, to a raised position, at which each support roller 5 is resting on and supported by the "V" rests 11 and located at a higher level which enables it not to interfere minimally with the said roller pairs 8 and 9 for any horizontal movement;
- a longitudinal movement according to the direction indicated by the arrows 20 equal to the distance between the two pairs of contiguous rollers 8 or to a multiple of the same;
- lowering up until the initial lowered position at which the "V" rests 11 are well below the support rollers 5 resting on the rollers 8 and 9;
- a longitudinal return translation with which the mobile frame 12 and thus the "V" rests 12 are brought back into the start-cycle initial position.

The longitudinal advancement transfer of the ceramic pipes 2 internally to the firing chamber 1 is thus realised by means of a succession of longitudinal advancements with which the ceramic pipes 2 are transferred together with the support rollers 5 on which they rest.

The ceramic pipes 2 are respectively loaded and unloaded, or extracted, at the furnace entrance and exit, together with the support roller 5 pairs with the help of "V" rests 11' predisposed on the cars 19 which are brought to the exit of the firing chamber 1. In particular, the cars 19 can be positioned at the entrance and exit of the furnace in such a way that the respective "V" rests 11 constitute, in accordance with the longitudinal advancement direction, the "natural" elongation of the "V" rests 11 series fixed to the mobile frame 12. The "V" rests 11' are, in a longitudinal direction, distanced exactly like the "V" rests 11; in a vertical direction the are located at the same height as the "V" rests 11 in their lower position.

In order to permit of freely moving the mobile frame 12 and the "V" rests 11 in a longitudinal direction, without any interference, the cars 19 have a total breadth which is smaller than the free breadth existing between the mobile frames 12 of the two series of "V" rests 11 and 11' arranged by the sides of the firing chamber 1.

Once loading has been completed, the single car 19, ready at the exit of the firing chamber 1, is distanced, substituted with a new car 19 and thus the fired ceramic pipes 2 are unloaded. The support rollers 5 remain on the car 19 which is by means of an appropriate movement line brought back to the inlet section of the firing chamber 1 where it is newly loaded with pipes 2 for firing. The cars 19 loaded up with new ceramic pipes 2 to be fired are sent to the entracnce of the firing chamber 1 of the furnace into which they are gradually introduced by means of a loading device which causes the pipes 2 to advance towards the inside of the firing chamber 1.

The invention permits of having rapid firing cycles and leads to considerable energy saving with respect to prior art systems. A further advantage is also consituted by the flexibility of the plane, which permits of operating without problems on pipes characterised by a wide range of diameters.

## Claims

1. A plant for firing ceramic pipes and the like, characterised in that it comprises:
- an elongate firing chamber (1), travelled longitudinally by material for firing from an entrance opening to an exit opening;
- a plurality of support roller pairs (5), each of which supports at least one ceramic pipe (2); said rollers (5) being arranged with axes parallel and normal to an advancement direction along said firing chamber (1) and being of a correct size so as to emerge, with both ends, from two opposite walls laterally describing the said firing chamber (1), through two slits (3) exhibited on said lateral walls along all of said walls length;
- external drawing and support means being provided to interact with the ends of said rollers (5) to support and set them in rotation about their respective axes;
- advancement means also being provided to operate in correspondence with the ends of the said roller (5) pairs, to produce an advancement of said pipes (2) along said firing chamber (1).

2. A plant, as in claim 1, characterised in that said drawing means comprise for each said roller (5);
- at least one drawing roller pair (8) rotating in the same direction as each other about two fixed, parallel and horizontal axes; said roller (8) pair interacting with a portion of a cylindrical surface of on of the ends of a single roller (5);
- at least one pair of idle rollers (9) pivoted about two fixed axes parallel to the axes of the drawing rollers (8); said roller pair (9) being predisposed to interact on contact with a portion of the external surface of the other end of one said single roller (5); the rollers (8) and (9) of the said pairs being placed at a minimum reciprocal distance which is inferior to a diameter of the end of said roller (5).

3. A plant, as in claim 1, characterised in that the said drawing rollers (8) and (9) are equidistantly arranged according to the longitudinal advancement direction inside said firing chamber (1).

4. A plant, as in claim 1, characterised in that said advancement means are located outside said firing chamber (1) in proximity to the lateral walls of said chamber (1) and comprise, on each side of said advancement means, a series of "V" rests (11) interacting on contact with the ends of the rollers (5); each series of said "V" rests (11) being fixed on a mobile frame (12) coupled, with an ability to translate in both vertical directions, to a frame (13) of a translating organ predisposed to perform translation movements in both longitudinal directions;
each said vertical movement having an extreme lower position, where each "V" rests (11) is situated inferiorly so as not to interfere with a roller (5) resting on the roller pairs (8) and (9), and an extreme upper position, at which a single roller (5), resting on and supported by said "V" rests (11), is lifted so as not to interfere minimally with said roller pairs (8) and (9) for any horizontal movement; each said longitudinal movement of said mobile frame (12) being equal to a distance, measured in the same direction, of any of the contiguous roller pairs (8) and (9) or an entire multiple of roller pairs (8) and (9).

5. A plant, as in claim 4, characterised in that said "V" rests (11) are equal and longitudinally equidistanced, as are the roller pairs (8) and (9).

6. A plant as in claim 4, characterised in that said frame (13) of each said translating organ is mounted on wheels (17) coupled in their turn on rails (18) arranged longitudinally in proximity to the firing chamber (1) lateral wall bases.

7. A plant, as in claim 5, characterised in that said mobile frame (12), on which the "V" rests (11) are fixed, is coupled to said frame (13) slidably in a vertical direction by m eans of vertical rods (14) which vertical rods (14) are commanded to perform said vertical translations with respect to the vertical frame (13) by a system of tappets activated by cams (16) arranged in phase and solidly interconnected in rotation about a same axis.
